# EUROPÄISCHE PATENTSCHRIFT

(11) **EP 3 964 744 B1**
(45) Veröffentlichungstag und Bekanntmachung des Hinweises auf die Patenterteilung: **06.11.2024**
(21) Anmeldenummer: 20195042.5
(22) Anmeldetag: 08.09.2020
(51) Int. Cl.: F17C 3/08, F17C 3/02

(54) **BEHÄLTER ZUR AUFNAHME EINES KRYOFLUIDS**
CONTAINER FOR CONTAINING A CRYOFLUID
RÉCIPIENT DESTINÉ À LA RÉCEPTION D'UN FLUIDE CRYOGÉNIQUE

(43) Veröffentlichungstag der Anmeldung: 09.03.2022
(73) Patentinhaber: Salzburger Aluminium Aktiengesellschaft, 5651 Lend (AT)
(72) Erfinder: BERGER, Simon, 6391 Fieberbrunn (AT); SENDLHOFER, Gernot, 5760 Saalfelden (AT)
(74) Vertreter: Weiser & Voith Patentanwälte Partnerschaft

(56) Entgegenhaltungen:
- EP-A1- 3 121 505
- EP-A1- 3 198 185
- US-A- 3 513 531
- US-A- 4 608 831
- US-A- 4 956 975
- US-A1- 2007 068 954
- US-A1- 2016 053 942
- US-A1- 2019 316 734
- US-B2- 8 403 000

## Beschreibung

Die vorliegende Erfindung betrifft einen Behälter zur Aufnahme eines Kryofluids, insbesondere kryogenen Wasserstoffs, umfassend einen zylindrischen, durch stirnseitige Böden abgeschlossenen Außenbehälter und einen etwa koaxial und mit Abstand darin angeordneten, zylindrischen, durch stirnseitige Böden abgeschlossenen Innenbehälter, wobei der Zwischenraum zwischen Außen- und Innenbehälter zwecks Wärmeisolierung evakuierbar ist, wobei eine Entnahmeleitung für Kryofluid durch die Wandung des Innenbehälters, den Zwischenraum und die Wandung des Außenbehälters geführt ist, und wobei zumindest einer der Böden des Innenbehälters ein gewölbter Boden ist.

Um den Energiegehalt von Energieträgern, welche unter Normalbedingungen gasförmig sind, zu erhöhen, werden diese für Transport- und Lagerungszwecke auf Tieftemperatur abgekühlt, dadurch verflüssigt und in einem temperaturisolierten Behälter gespeichert. So werden beispielsweise zum Antrieb von Fahrzeugen verflüssigtes Erdgas oder verflüssigter Wasserstoff als Zweiphasengemisch mit hoher Energiedichte gespeichert, um dann für den Betrieb einer Verbrennungskraftmaschine oder von Brennstoffzellen des Fahrzeugs genutzt zu werden.

Bei herkömmlichen Doppelwand-Kryobehältern der eingangs genannten Art, wie sie beispielsweise aus der US 2007/0068954 A1 bekannt sind, haben Innen- und Außenbehälter jeweils - anstelle der für die Druckbeaufschlagung idealen Halbkugelform - zur Platzeinsparung sog. gewölbte Böden ("dished ends"), z.B. elliptische Böden, Klöpperböden oder Korbbogenböden.

Die Entnahmeleitung für Kryofluid, welche bei den bekannten Behältern die gewölbten Böden von Innen- oder Außenbehälter durchsetzt, wird in der Regel über eine Heizeinrichtung, z.B. einen Wärmetauscher, dem Verbraucher zugeführt, um das Kryofluid auf die richtige Nutztemperatur für den Verbrauch zu bringen. Um dabei eine thermische Rückzirkulation des in der Heizeinrichtung erwärmten Kryofluids zurück in den Behälter zu unterbinden, wird die Entnahmeleitung vom Behälter zur Heizeinrichtung zumindest ein Stück weit nach oben geführt, so dass sie einen Wärmesiphon bildet.

Das zwischen Behälter und Heizeinrichtung verlaufende, Kryofluid führende Stück der Entnahmeleitung muss wärmeisoliert werden, um ein Aneisen der Umgebungsluft daran zu verhindern. Speziell bei Wasserstofftanks könnte dies zu einer gefährlichen Knallgasreaktion führen, wenn aus der Entnahmeleitung ausdiffundierender molekularer Wasserstoff auf angelagertes Sauerstoffeis trifft.

Nach dem Stand der Technik wird die Entnahmeleitung daher zwischen Behälter und Wärmetauscher in einem zwecks Wärmeisolierung evakuierten Anbaugehäuse des Behälters geführt. Dies ist nicht nur aufwendig, sondern führt auch zu einem größeren Platzbedarf für den Behälter und seine Leitungen und bei begrenzt zu Verfügung stehendem Bauraum zu einem reduzierten Fassungsvermögen des Behälters.

Die Erfindung setzt sich zum Ziel, die Nachteile des bekannten Standes der Technik zu überwinden und einen Behälter für Kryofluide zu schaffen, welcher einfacher und mit geringerem Platzbedarf installiert werden kann und so auch ein größeres Behältervolumen erlaubt.

Dieses Ziel wird mit einem Behälter der einleitend genannten Art erreicht, der sich gemäß der Erfindung dadurch auszeichnet, dass der dem gewölbten Boden des Innenbehälters zugewandte Boden des Außenbehälters ein Diffuseurboden ist, so dass sich zwischen dem Randbereich des Diffuseurbodens und dem Randbereich des gewölbten Bodens eine ringförmige Erweiterung des Zwischenraums ergibt, in welcher die Entnahmeleitung über zumindest einen Umfangsabschnitt der Ringform geführt ist.

Die erfindungsgemäße Kombination aus einem Diffuseurboden am Außenbehälter und einem gewölbten Boden am Innenbehälter schafft - ohne die Gesamtlänge des Behälters zu erhöhen - einen evakuierten Ringraum, in dem die Entnahmeleitung bei etwa horizontaler Einbaulage des Behälters nach oben geführt werden kann, sodass sie einen Wärmesiphon bildet und gleichzeitig durch das im Zwischenraum herrschende Vakuum wärmeisoliert ist. Eine gesonderte Wärmeisolierung dieses Stücks der Entnahmeleitung, z.B. in einem Anbaugehäuse, entfällt. Dadurch werden der Aufbau und die Installation des Behälters wesentlich vereinfacht, der zur Verfügung stehende Bauraum optimal ausgenützt und das Fassungsvermögen des Behälters maximiert.

Besonders vorteilhaft ist es, wenn der Umfangsabschnitt, über den die Entnahmeleitung in der ringförmigen Zwischenraumerweiterung geführt ist, sich über etwa die Hälfte der Ringform erstreckt. Dadurch liegt der Durchtritt der Entnahmeleitung durch die Wandung des Innenbehälters etwa diametral zum Durchtritt der Entnahmeleitung durch die Wandung des Außenbehälters. Mit dieser Maßnahme wird der als Wärmesiphon dienende Abschnitt der Entnahmeleitung maximiert und eine größtmögliche thermische Entkopplung zwischen der Heizeinrichtung außerhalb des Außenbehälters und dem Kryofluid innerhalb des Innenbehälters erreicht.

Bevorzugt endet die Entnahmeleitung im Innenbehälter an einem etwa diametral zu ihrem Durchtritt durch die Wandung des Innenbehälters liegenden Ort. Dies begünstigt die Entnahme von Kryogas und die sich dadurch ergebende U-Form der Entnahmeleitung optimiert ihre Wirkung als Wärmesiphon.

Die Entnahmeleitung kann an sich an jeder beliebigen Stelle aus dem Innenbehälter herausgeführt werden. Besonders günstig ist es, wenn der Durchtritt der Entnahmeleitung durch die Wandung des Innenbehälters im Randbereich des gewölbten Bodens liegt, so dass sie direkt in die ringförmige Erweiterung mündet. Der Zwischenraum zwischen dem Mantel des Innenbehälters und dem Mantel des Außenbehälters kann so minimiert und damit das Fassungsvermögen des Innenbehälters maximiert werden.

In einer weiteren bevorzugten Ausführungsform der Erfindung trägt der Außenbehälter direkt den Wärmetauscher und die Entnahmeleitung ist unmittelbar nach ihrem Durchtritt durch die Wandung des Außenbehälters durch diesen hindurchgeführt. Damit ist die Entnahmeleitung zwischen Behälter und Wärmetauscher an keiner Stelle der Umgebung ausgesetzt.

Bevorzugt ist der Innenbehälter auch mit einer Entgasungsleitung versehen, um vor oder während des Betankens Druck darin abzubauen und so den Tankvorgang zu erleichtern. Gemäß einem bevorzugten Merkmal der Erfindung ist die Entgasungsleitung in der ringförmigen Erweiterung des Zwischenraums zu einem Entgasungsanschluss in der Wandung des Außenbehälters geführt. Der im Ringraum zur Verfügung stehende Platz erleichtert dabei die dazu erforderlichen Schweiß- bzw. Anschlussarbeiten bei der Fertigung des Behälters.

Aus denselben Gründen mündet eine Füllleitung zum Betanken des Innenbehälters bevorzugt in die Entnahmeleitung und ist in der ringförmigen Erweiterung des Zwischenraums zu einem Füllanschluss in der Wandung des Außenbehälters geführt.

Der Kryobehälter der Erfindung kann ferner mit einer den Innenbehälter durchsetzenden Heizleitung ausgestattet werden, um den Druck des Kryofluids für die Entnahme zu erhöhen. Bevorzugt wird diese den Innenbehälter durchsetzende Heizleitung über die ringförmige Erweiterung des Zwischenraums bis zu ihrem Durchtritt durch die Wandung des Außenbehälters geführt. Dadurch wird der zwischen Diffuseurboden und gewölbtem Boden geschaffene Ringraum optimal ausgenützt.

Die Erfindung wird nachstehend anhand eines in den beigeschlossenen Zeichnungen dargestellten Ausführungsbeispieles näher erläutert. In den Zeichnungen zeigt:
Fig. 1 den Behälter der Erfindung in einem Längsschnitt; und
Fig. 2 den Behälter von Fig. 1 in einer Schrägansicht von vorne bei abgenommenem Diffuseurboden.

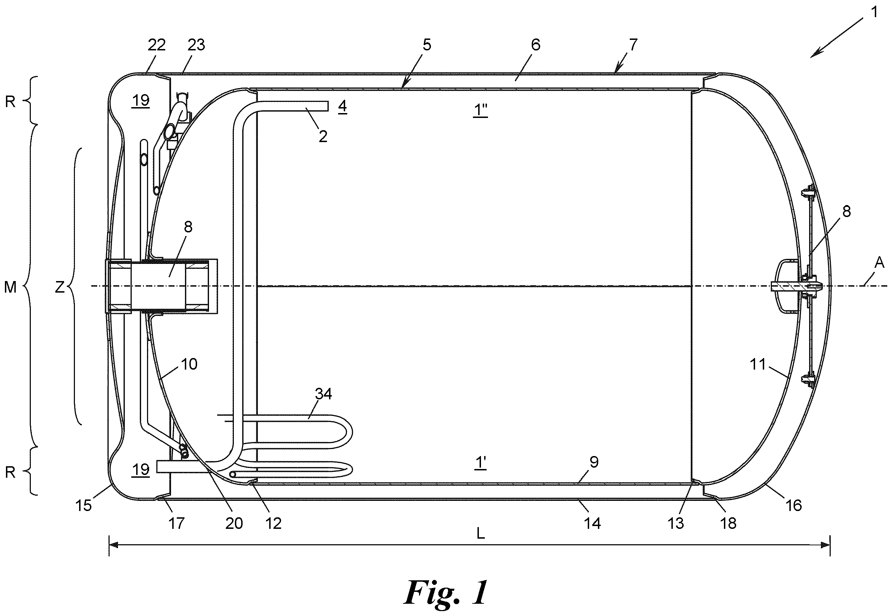

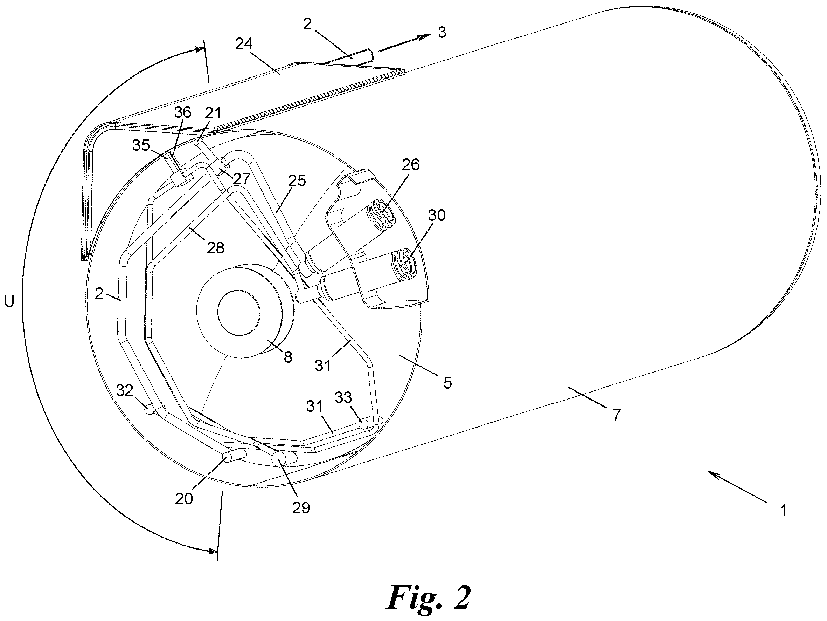

In den Fig. 1 und 2 ist ein Behälter (Tank) 1 für ein Kryofluid wie verflüssigtes Erdgas (Liquefied Natural Gas, LNG) oder (hier:) verflüssigten Wasserstoff (Liquid Hydrogen, LH2) gezeigt. Das Kryofluid liegt im Behälter 1 in der Regel in der Form eines Zweiphasengemischs aus Kryoflüssigkeit im unteren Bereich 1' und Kryogas im oberen Bereich 1" des Behälters 1 vor.

Das Kryofluid wird als Kryogas aus dem oberen Bereich 1" des Behälters 1 über eine Entnahmeleitung 2 entnommen und einem Verbraucher 3 (nicht gezeigt) zugeführt, z.B. einer Verbrennungskraftmaschine oder einer Brennstoffzelle. Wenn Kryoflüssigkeit oder zweiphasiges Kryofluid entnommen werden soll, könnte die Entnahmeleitung 2 im Behälter 1 auch von einem anderen Ort 4 als von dessen oberem Bereich 1" ausgehen.

Der Behälter 1 ist ein Doppelwand-Behälter mit einem Innenbehälter 5, der mit allseitigem Abstand unter Bildung eines Zwischenraums 6 in einem Außenbehälter 7 angeordnet ist. Der Zwischenraum 6 wird mit einem wärmeisolierenden Material gefüllt und/oder bevorzugt evakuiert, um den Innenbehälter 5 gegenüber dem Außenbehälter 7 thermisch zu isolieren.

Der Innenbehälter 5 und der Außenbehälter 7 haben jeweils etwa die Form eines langgestreckten Zylinders mit einer Zylinderachse A und sind koaxial zueinander angeordnet. Zur Halterung des Innenbehälters 5 mit allseitigem Abstand gegenüber der Außenbehälter 7 ist der Innenbehälter 5 über endseitige, thermisch isolierte Stützen 8 oder auf anderer Weise im Außenbehälter 7 abgestützt. Die Stützen 8 können zusätzlich auch federnd ausgeführt sein.

Der Behälter 1 wird in seiner Einbaulage, z.B. an oder in einem Fahrzeug, in der Regel liegend betrieben, d.h. mit etwa horizontaler Achse A, wenn das Fahrzeug horizontal steht.

Der Innenbehälter 5 ist aus einem etwa zylindrischen Mantel 9 und zwei diesen end- bzw. stirnseitig abschließenden Böden 10, 11 zusammengesetzt, beispielsweise an umlaufenden Schweißnähten 12, 13 verschweißt. Zumindest einer der Böden 10, 11 des Innenbehälters 5 (hier: beide Böden) ist ein sog. gewölbter Boden. Unter einem gewölbten Boden wird im Druckkesselbau jede Art von Boden mit nach außen konvexer Wölbung verstanden, wie ein elliptischer Boden, Klöpperboden, Korbbogenboden od.dgl.

Der Außenbehälter 7 ist ebenso aus einem etwa zylindrischen Mantel 14 und diesen end- bzw. stirnseitig abschließenden Böden 15, 16 zusammengesetzt, beispielsweise an umlaufenden Schweißnähten 17, 18 verschweißt. Zumindest einer der Böden 15, 16 (hier: der Boden 15) ist ein sogenannter Diffuseurboden ("reverse-dished end"), der in einem Mittelabschnitt M nach innen gewölbt ist, d.h. von außen gesehen konkav ist. Ein zentraler Bereich Z des nach innen gewölbten Bereichs M kann optional - insbesondere bei Verwendung von axialen Stützen 8 zur Abstützung des Innenbehälters 5 - geringfügig nach außen gewölbt (konvex) sein, dies ist jedoch nicht zwingend.

Der Innenbehälter 5 ist aufgrund der gewölbten Böden 10, 11 für die Aufnahme von Kryofluid unter hohem Druck geeignet. Der Außenbehälter 7 braucht demgegenüber lediglich den Luftdruck der Umgebung gegenüber dem Vakuum des Zwischenraums 6 widerstehen zu können, wofür die Druckfestigkeit des Diffuseurbodens 15 ausreicht.

In dem Randbereich R, der radial außerhalb des einwärts gewölbten Bereichs M des Diffusuerbodens 15 liegt, ergibt sich zwischen dem Diffuseurboden 15 des Außenbehälters 7 und dem benachbarten gewölbten Boden 10 des Innenbehälters 5 eine ringförmige Erweiterung 19 des evakuiertem Zwischenraums 6 zwischen Innen- und Außenbehälter 5, 7, und zwar ohne die axiale Länge L des Behälters 1 zu vergrößern. Die ringförmige Erweiterung 19 kann für im Vakuum liegende Leitungsführungen verwendet werden, wie anschließend beschrieben. Wenn solche Leitungsführungen nur an einem Ende des Behälters 1 erforderlich sind, kann beispielsweise der andere Boden 16 des Außenbehälters 7 - wie hier - als gewölbter Boden ausgeführt sein.

Fig. 2 zeigt die Leitungsführung in der ringförmigen Erweiterung 19 zwischen dem Diffuseurboden 15 des Außenbehälters 7 und dem gewölbten Boden 10 des Innenbehälters 5. Aufgrund der Ringform der Erweiterung 19 können darin Leitungen in Umfangsrichtung, d.h. jeweils über entsprechende Umfangsabschnitte U der Ringform, geführt werden.

Insbesondere kann die Erweiterung 19 für den eingangs erörterten, als Wärmesiphon dienenden aufsteigenden Abschnitt der Entnahmeleitung 2 herangezogen werden. Die Entnahmeleitung 2 durchsetzt dazu die Wandung des Innenbehälters 5, hier den gewölbten Boden 10, an einem Durchtritt 20 im unteren Bereich 1', läuft dann über einen Abschnitt U (hier: etwa die Hälfte) des Umfangs der Ringform der Erweiterung 19 in dieser nach oben und durchsetzt schließlich die Wandung des Außenbehälters 7 an einem Durchtritt 21 an dessen Oberseite. Der Durchtritt 21 kann beispielsweise im Bord 22 des Diffuseurbodens 15 oder in einem unmittelbar daran angrenzenden Abschnitt 23 des Mantels 14 des Außenbehälters 7 liegen.

Die Entnahmeleitung 2 wird unmittelbar nach ihrem Durchtritt 21 durch eine Heizeinrichtung 24, z.B. einen Wärmetauscher, hindurchgeführt, die bzw. der auf der Oberseite des Außenbehälters 7 angebracht ist. Dadurch wird die aus dem Behälter 1 austretende Entnahmeleitung 2 sofort von der Heizeinrichtung 24 abgedeckt und ist nicht gegenüber der Außenluft exponiert.

Der als Wärmesiphon dienende, über die Erweiterung 19 geführte Teil der Entnahmeleitung 2 ist durch das dort herrschende Vakuum wärmeisoliert. Wenn die Entnahmeleitung 2 im Innenbehälter 5 an einem Ort 4 etwa diametral zum Durchtritt 20 endet, ergibt sich in der Einbaulage des Behälters 1 (liegende Achse A) vom Ort 4 über den Durchtritt 20 bis hin zum Durchtritt 21 ein etwa U-förmiger Wärmesiphon in der Entnahmeleitung 2.

Die ringförmige Erweiterung 19 des Zwischenraums 6 kann auch für die Führung weiterer Leitungen und die Beherbergung von Anschlüssen verwendet werden. Beispielsweise kann eine Füllleitung 25 zum Befüllen des Innenbehälters 5 von einem Füllanschluss 26 in der Wandung des Außenbehälters 7 über einen Umfangsabschnitt der Erweiterung 19 geführt werden. Wie gezeigt kann die Füllleitung 25 über ein T-Stück 27 gleich direkt in die Entnahmeleitung 2 einmünden, oder sie kann gesondert in den Innenbehälter 5 einmünden.

Zum Erleichtern des Füllvorganges kann ferner eine Entgasungsleitung 28 vorgesehen werden, die vom Kopfbereich 1" des Innenbehälters 5 ausgeht und durch einen Durchtritt 29 durch die Wandung des Innenbehälters 5, hier den Boden 10, hindurch und über einen Umfangsabschnitt der Erweiterung 19 bis zu einem Entgasungsanschluss 30 in der Wandung des Außenbehälters 7 geführt ist. Sowohl der Entgasungsanschluss 30 als auch der Füllanschluss 26 können im Diffuseurboden 15, insbesondere dessen Bord 22, oder im Anschlussbereich 23 des Mantels 14 des Außenbehälters 7 angeordnet sein.

Des Weiteren ist eine optionale Heizleitung 31 gezeigt, die über Durchtritte 32, 33 in der Wandung des Innenbehälters 5, hier des Bodens 10, in den Innenbehälter 5 ein- und austritt und im Bodenbereich 1 des Innenbehälters 5 eine Heizschlange 34 bildet. Die Heizleitung 31 kann ein elektrischer Widerstanddraht oder eine Fluidleitung für ein Wärmemedium sein. Als Wärmemedium kann z.B. das - im Vergleich zum Kryofluid wesentlich wärmere - Kühlmittel einer als Verbraucher 3 eingesetzten Verbrennungskraftmaschine verwendet werden.

Die Heizleitung 31 verläuft außerhalb des Innenbehälters 5 über entsprechende Umfangsabschnitte der ringförmigen Erweiterung 19 bis hin zu Durchtritten 35, 36 in der Wandung des Außenbehälters 7. Von dort kann die Heizleitung 31 beispielsweise mit demselben Wärmemedium, z.B. dem Kühlmittel einer Verbrennungskraftmaschine, gespeist werden, mit dem auch die Heizeinrichtung 24 betrieben werden kann.

Die Erfindung ist nicht auf die dargestellten Ausführungsformen beschränkt, sondern umfasst alle Varianten, Modifikationen und deren Kombination, die in den Rahmen der angeschlossenen Ansprüche fallen.

## Patentansprüche

1. Behälter zur Aufnahme eines Kryofluids, insbesondere kryogenen Wasserstoffs, umfassend einen zylindrischen, durch stirnseitige Böden (15, 16) abgeschlossenen Außenbehälter (7) und einen etwa koaxial und mit Abstand darin angeordneten, zylindrischen, durch stirnseitige Böden (10, 11) abgeschlossenen Innenbehälter (5), wobei der Zwischenraum (6) zwischen Außen- und Innenbehälter (7, 5) zwecks Wärmeisolierung evakuierbar ist, wobei eine Entnahmeleitung (2) für Kryofluid durch die Wandung des Innenbehälters (5), den Zwischenraum (6) und die Wandung des Außenbehälters (7) geführt ist, und wobei zumindest einer der Böden (10, 11) des Innenbehälters (5) ein gewölbter Boden ist, **dadurch gekennzeichnet, dass** der dem gewölbten Boden (10) des Innenbehälters (5) zugewandte Boden (15) des Außenbehälters (7) ein Diffuseurboden ist, so dass sich zwischen dem Randbereich (R) des Diffuseurbodens (15) und dem Randbereich des gewölbten Bodens (10) eine ringförmige Erweiterung (19) des Zwischenraums (6) ergibt, in welcher die Entnahmeleitung (2) über zumindest einen Umfangsabschnitt (U) der Ringform geführt ist.

2. Behälter nach Anspruch 1, **dadurch gekennzeichnet, dass** der Umfangsabschnitt (U) sich über etwa die Hälfte der Ringform erstreckt, so dass der Durchtritt (20) der Entnahmeleitung (2) durch die Wandung des Innenbehälters (5) etwa diametral zum Durchtritt (21) der Entnahmeleitung (2) durch die Wandung des Außenbehälters (7) liegt.

3. Behälter nach Anspruch 2, **dadurch gekennzeichnet, dass** die Entnahmeleitung (2) im Inneren des Innenbehälters (5) an einem etwa diametral zu ihrem Durchtritt (20) durch die Wandung des Innenbehälters (5) liegenden Ort (4) endet.

4. Behälter nach einem der Ansprüche 1 bis 3, **dadurch gekennzeichnet, dass** der Durchtritt (20) der Entnahmeleitung (2) durch die Wandung des Innenbehälters (5) im Randbereich des gewölbten Bodens (10) liegt.

5. Behälter nach einem der Ansprüche 1 bis 4, **dadurch gekennzeichnet, dass** der Außenbehälter (7) einen Wärmetauscher (24) trägt, durch welchen die Entnahmeleitung (2) unmittelbar nach ihrem Durchtritt durch die Wandung des Außenbehälters (7) hindurchgeführt ist.

6. Behälter nach einem der Ansprüche 1 bis 5, **dadurch gekennzeichnet, dass** der Innenbehälter (5) mit einer Entgasungsleitung (28) versehen ist, welche in der ringförmigen Erweiterung (19) des Zwischenraums (6) zu einem Entgasungsanschluss (30) in der Wandung des Außenbehälters (7) geführt ist.

7. Behälter nach einem der Ansprüche 1 bis 6, **dadurch gekennzeichnet, dass** in die Entnahmeleitung (2) eine Füllleitung (25) einmündet, welche in der ringförmigen Erweiterung (19) des Zwischenraums (6) zu einem Füllanschluss (26) in der Wandung des Außenbehälters (7) geführt ist.

8. Behälter nach einem der Ansprüche 1 bis 7, **dadurch gekennzeichnet, dass** der Innenbehälter (5) von einer Heizleitung (31) durchsetzt ist, welche über die ringförmige Erweiterung (19) des Zwischenraums (6) durch die Wandung des Außenbehälters (7) hindurchgeführt ist.

## Claims

1. A container for receiving a cryogenic fluid, especially cryogenic hydrogen, comprising an outer cylindrical container (7) closed by bottoms (15, 16) on the face sides and an inner cylindrical container (5) arranged approximately coaxially and at a distance inside the outer container (7) and closed by bottoms (10, 11) on the face sides, wherein the interspace (6) between the outer and inner containers (7, 5) can be evacuated for thermal insulation purposes, wherein a extraction line (2) for cryogenic fluid passes through the wall of the inner container (5), the interspace (6), and the wall of the outer container (7), and wherein at least one of the bottoms (10, 11) of the inner container (5) is a dished bottom, **characterized in that** the bottom (15) of the outer container (7) facing the dished bottom (10) of the inner container (5) is an inverted bottom, so that an annular enlargement (19) of the interspace (6) is formed between the edge zone (R) of the inverted bottom (15) and the edge zone of the dished bottom (10) in which the extraction line (2) is routed over at least a peripheral section (U) of the annulus.

2. The container according to claim 1, **characterized in that** the peripheral section (U) extends over approximately half of the annulus, so that the passage (20) of the extraction line (2) through the wall of the inner container (5) is approximately diametrically opposite to the passage (21) of the extraction line (2) through the wall of the outer container (7).

3. The container according to claim 2, **characterized in that** the extraction line (2) ends at a location (4) within the inner container (5) that is approximately diametrically opposite to its passage (20) through the wall of the inner container (5).

4. The container according to any one of claims 1 to 3, **characterized in that** the passage (20) of the extraction line (2) through the wall of the inner container (5) is located in the edge zone of the dished bottom (10).

5. The container according to any one of claims 1 to 4, **characterized in that** the outer container (7) carries a heat exchanger (24) through which the extraction line (2) passes immediately after its passage through the wall of the outer container (7).

6. The container according to any one of claims 1 to 5, **characterized in that** the inner container (5) is provided with a degassing line (28) which is routed in the annular enlargement (19) of the interspace (6) towards a degassing connection (30) in the wall of the outer container (7).

7. The container according to any one of claims 1 to 6, **characterized in that** a filling line (25), which is routed in the annular enlargement (19) of the interspace (6) towards a filling connection (26) in the wall of the outer container (7), discharges into the extraction line (2).

8. The container according to any one of claims 1 to 7, **characterized in that** the inner container (5) is traversed by a heating line (31) which is routed through the annular enlargement (19) of the interspace (6) through the wall of the outer container (7).

## Revendications

1. Récipient destiné à la réception d'un fluide cryogénique, notamment d'hydrogène cryogénique, comprenant un récipient extérieur (7) cylindrique fermé par des fonds (15, 16) des côtés frontaux et un récipient intérieur (5) cylindrique disposé à peu près co-axialement et à la distance dans le récipient extérieur et fermé par des fonds (10, 11) des côtés frontaux, dans lequel l'espace intermédiaire (6) entre les récipients extérieur et intérieur (7, 5) peut être évacué à des fins d'isolation thermique, dans lequel une conduite de prélèvement (2) pour du fluide cryogénique est menée à travers la paroi du récipient intérieur (5), l'espace intermédiaire (6) et la paroi du récipient extérieur (7), et dans lequel au moins un des fonds (10, 11) du récipient intérieur (5) est un fond bombé, **caractérisé en ce que** le fond (15) du récipient extérieur (7) orienté vers le fond bombé (10) du récipient intérieur (5) est un fond inversé, de sorte qu'entre la zone de bordure (R) du fond inversé (15) et la zone de bordure du fond bombé (10) il se forme un élargissement annulaire (19) de l'espace intermédiaire (6) dans lequel la conduite de prélèvement (2) est menée sur au moins une section périphérique (U) de la forme annulaire.

2. Récipient selon la revendication 1, **caractérisé en ce que** la section périphérique (U) s'étend à peu près sur la moitié de la forme annulaire, de sorte que le passage (20) de la conduite de prélèvement (2) à travers la paroi du récipient intérieur (5) se situe à peu près diamétralement opposé au passage (21) de la conduite de prélèvement (2) à travers la paroi du récipient extérieur (7).

3. Récipient selon la revendication 2, **caractérisé en ce que** la conduite de prélèvement (2) se termine à l'intérieur du récipient intérieur (5) à un endroit (4) situé à peu près diamétralement opposé à son passage (20) à travers la paroi du récipient intérieur (5).

4. Récipient selon l'une des revendications 1 à 3, **caractérisé en ce que** le passage (20) de la conduite de prélèvement (2) à travers la paroi du récipient intérieur (5) se situe dans la zone de bordure du fond bombé (10).

5. Récipient selon l'une des revendications 1 à 4, **caractérisé en ce que** le récipient extérieur (7) porte un échangeur de chaleur (24) par lequel la conduite de prélèvement (2) est menée immédiatement après son passage à travers la paroi du récipient extérieur (7).

6. Récipient selon l'une des revendications 1 à 5, **caractérisé en ce que** le récipient intérieur (5) est muni d'une conduite de dégazage (28), laquelle est menée dans l'élargissement annulaire (19) de l'espace intermédiaire (6) vers un raccord de dégazage (30) dans la paroi du récipient extérieur (7).

7. Récipient selon l'une des revendications 1 à 6, **caractérisé en ce qu'**une conduite de remplissage (25), laquelle est menée dans l'élargissement annulaire (19) de l'espace intermédiaire (6) vers un raccord de remplissage (26) dans la paroi du récipient extérieur (7), débouche dans la conduite de prélèvement (2).

8. Récipient selon l'une des revendications 1 à 7, **caractérisé en ce que** le récipient intérieur (5) est traversé par une conduite de chauffage (31), laquelle est menée par le biais de l'élargissement annulaire (19) de l'espace intermédiaire (6) à travers la paroi du récipient extérieur (7).
